# EUROPEAN PATENT SPECIFICATION

(11) **EP 0 812 665 B1**
(45) Date of publication and mention of the grant of the patent: **09.01.2002**
(21) Application number: 96904293.6
(22) Date of filing: 01.03.1996
(51) Int. Cl.: B26F 3/08, H05B 1/02, H05B 3/26, H05B 3/10, B29C 65/20

(54) **HOT CUTTING BLADE**
BEHEIZTE KLINGE
LAME DE COUPE CHAUFFEE

(30) Priority: 02.03.1995 JP 7064295
(43) Date of publication of application: 17.12.1997
(73) Proprietor: TERUMO KABUSHIKI KAISHA, Tokyo 151 (JP)
(72) Inventor: SUZUKI, Atsushi, Shizuoka-ken 418 (JP); TAKAHASHI, Takanori, Yamanashi-ken 409-38 (JP); UCHIDA, Takumi, Yamanashi-ken 400-05 (JP); CHINOMI, Norimitsu, Osaka-fu 565 (JP); HOSHINO, Takeshi, Kooriyama-shi Fukushima-ken 963 (JP); TANAKA, Kazutoshi, Kooriyama-shi Fukushima-ken 963-06 (JP)
(74) Representative: Joly, Jean-Jacques
(86) International application number: JP9600488
(87) International publication number: WO9626814

(56) References cited:
- EP-A- 0 049 773
- EP-A- 0 139 350
- EP-A- 0 571 978
- DE-A- 2 329 424
- JP-A- 59 049 925
- US-A- 4 864 101
- E. HEINE: "Hot idea : PRINT A HEATER" DUPONT MAGAZINE, vol. 57, no. 1, January 1963 - February 1963, WELMINGTON,USA, pages 19-21, XP002060860
- MICROFILM OF THE SPECIFICATION AND DRAWINGS ANNEXED TO THE WRITTEN APPLICATION OF JAPANESE UTILITY MODEL, Application No. 200725/1983, (Laid-open No. 109796/1985) (STANLEY ELECTRIC CO., LTD.), 25 July 1985.

## Description

### [Technical Field]

The present invention relates to a self-heating thermal cutting blade for melting and cutting a resin tube, according to the preamble of claim 1 (EP-A-0 571 978).

### [Background Art]

To connect flexible resin tubes to each other aseptically, known is a tube connecting apparatus which melts and cuts these tubes and subsequently bonds the cut edges to each other (Jpn. Pat. Appln. KOKOKU Publication No. 61-30582).

The tube connecting apparatus has a pair of holders (block) capable of holding two tubes to be connected, in parallel and a wafer-shaped thermal cutting blade which is movably provided between the two holders in the direction of intersecting these tubes. The manner how to use the device will be described later in detail in connection with embodiments of the present invention. To describe briefly, however, the manner is as follows:

First, the wafer-shaped thermal cutting blade is heated, while reversely-directed two tubes are being held by the two holders in parallel. The tubes are melted and cut by moving the heated thermal cutting blade. Then, one of two holders is moved in such a direction perpendicular to the longitudinal direction of the tubes to coincide the cut edges of the tubes to be bonded to each other. When the cutting blade is removed from this state, the molten cutting edges of two tubes are brought into direct contact with each other, thereby attaining fusion bonding.

The wafer-shaped cutting blade to be used in the conventional tube connecting device mentioned above has a structure which comprises a metal plate folded in half and a resistor element formed in a desired pattern on the inner surface of the metal plate via an insulating layer (adhesion layer). When power is supplied to the resistor element by way of the terminals formed on the both ends, the resistor element generates heat, raising temperature of the entire wafer (Jpn. Pat. Appln. KOKAI Publication No. 59-49925).

However, the conventional wafer-shaped cutting blade has a complicated five-layered structure consisting of a metal plate, insulating layer, resistor element, insulating layer, and metal plate, with the result that the wafer is inevitably thick. The thick blade is disadvantageous when a tube is melted, cut and fuse-bonded, decreasing the yield of successfully connected tubes.

Furthermore, in manufacturing the wafer, many steps are required such as an insulating layer forming step, a resistor element forming step, a metal plate folding step, thereby increasing a manufacturing cost and a material cost.

### [Disclosure of the Invention]

An object of the present invention is to improve a thermal cutting blade for use in such a tube connecting device as mentioned above, and more specifically, to provide a thermal cutting blade which has a reduced thickness due to a simple structure and can be manufactured at a low cost.

The object can be attained by a thermal cutting blade of a self-heating type for melting and cutting a resin tube, comprising a ceramic substrate; a resistor element formed on the ceramic substrate in a desired pattern, for generating heat upon power supply; terminal portions formed on both ends of the resistor element; and an insulating layer covering the surface of the resistor element.

Furthermore, the aforementioned object can be achieved by a thermal cutting blade of a self-heating type for melting and cutting a resin tube, comprising a metal substrate; a first insulating layer made of an inorganic insulating material and formed on the metal substrate; a resistor element formed on the first insulating layer in a desired pattern; terminal portions formed on both ends of the resistor element; and a second insulating layer covering the surface of the resistor element.

In an embodiment of the present invention, the insulating layer (at least the first insulating layer when first and second insulating layers are employed) is formed of an inorganic insulating material.

In another embodiment of the present invention, said resistor element is formed by printing the conductive paste in a desired pattern and baking it. It is possible to form the resistor element and the insulating layer (at least the first insulating layer when first and second insulating layers are employed) by simultaneous baking. Particularly in this case, the first insulating layer, the resistor element and the second insulating layer may be formed by simultaneous baking.

In a further embodiment, a fuse portion susceptible to fuse or melt-off when a predetermined high temperature is maintained for a predetermined time period, are provided in at least one part of the resistor element.

### [Brief Description of the Drawings]

FIG. 1 is a perspective view showing an embodiment of the thermal cutting blade of the present invention;
FIG. 2 is a perspective view showing another embodiment of the thermal cutting blade of the present invention;
FIG. 3 is a further embodiment of the thermal cutting blade of the present invention;
FIG. 4 is a perspective view showing a structure of a tube connecting apparatus for cutting and connecting tubes by use of the thermal cutting blade of the present invention; and
FIGS. 5 to 8 are perspective views showing connecting steps of tubes by use of the tube connecting apparatus shown in FIG. 4.

### [Best Mode of Carrying Out the Invention]

Hereinbelow, the thermal cutting blade of the present invention will be described based on preferable embodiments shown in the accompanying drawings.

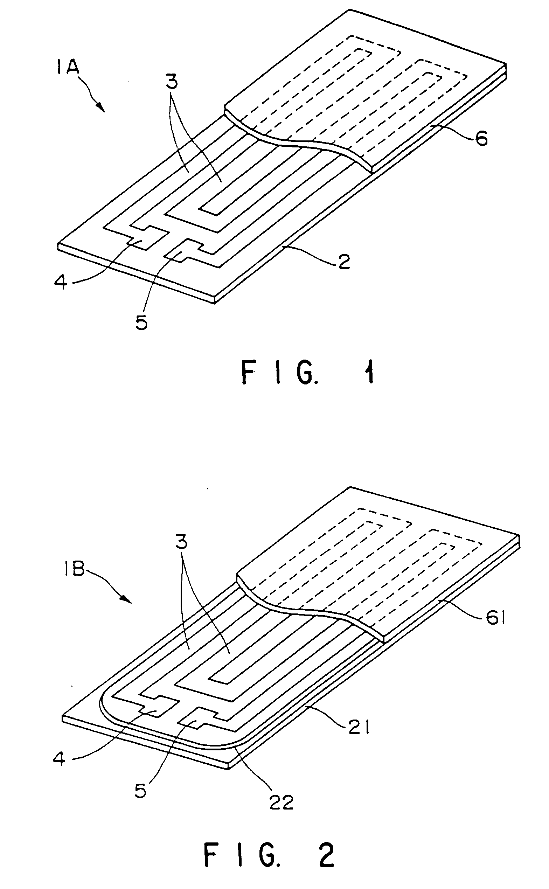

FIG. 1 is a perspective view showing an embodiment of the thermal cutting blade of the present invention. A thermal cutting blade 1A of the present invention has a ceramic substrate 2, as shown in the figure. The ceramic material constituting the ceramic substrate 2 may be either an oxide series ceramic material or a non-oxide series ceramic material. For example, alumina (Al₂O₃), silica (SiO₂), beryllia (BeO), silicon carbide (SiC), aluminum nitride (AlN), boron nitride (BN), and silicon nitride (Si₃N₄) may be used either singly or in combination of at least two of these compounds (for example, SIALON). In addition, at least one compound selected from SiO₂, B₂O₃, PbO, ZnO₂, MgO, CaO, BaO, SrO, and Y₂O₃ may be added.

The ceramic substrate 2 further acts as an insulating layer for a resistor element 3 described later since it has not only sufficient rigidity but also insulating properties inherent thereto.

The ceramic substrate 2 is not particularly restricted in thickness as far as it has a sufficient strength resistible to the cutting of a tube.

On the ceramic substrate 2, the resistor element 3 is formed in a desired pattern. Onto the both ends of the resistor element 3, terminals 4 and 5 are formed. The materials of the terminals 4 and 5 may be the same as that of resistor element 3. It is preferable that the resistor element 3 and the terminals 4 and 5 (hereinafter collectively referred to as "resistor element 3 etc.") be simultaneously formed by using a screen printing, decalcomania process, etching, plating, vapor deposition, sputtering, CVD or the like.

Examples of a metal material constituting the resistor element 3 include Ag; Ag series alloys such as Ag-Pd alloy, Ag-Pt alloy and Ag-Pd-Pt alloy; Au; Au series alloys such as Au-Cu alloy; Ni; Ni series alloys such as Ni-Cr alloy; Fe series alloys such as stainless steel; Cu; Cu series alloys such as Cu-Zn alloy and Cu-Sn alloy; Al; and Al series alloys such as Al-Mg alloy and Al-Cu alloy. In the case where the resistor element 3 is formed by printing, it is preferred to use the so-called thick-film conductive paste or thick-film resistor paste having Ag particles or Ag series alloy particles connected to each other by a glass binder.

The thickness (cured state) of the resistor element 3 etc., which is not particularly restricted, is preferably from about 10-25 µm, and more preferably about 10-15 µm.

The resistivity of the resistor element 3 is preferably about 5-50 Ω, and more preferably about 5-20Ω.

On the resistor element 3, an insulating layer 6 is formed so as to cover the surface of the resistor element 3 except for the terminals 4 and 5. The insulating layer 6 is formed of a coating film made of any one of various ceramic materials as mentioned above; an inorganic material such as a glass including borosilicate glass, lead glass, phosphate glass; or an organic material having heat resistance, such as polyimide. In particular, the insulating material 6 is preferably formed of a ganic insulating material such as the ceramic material mentioned above or glass. Incidentally, as the ceramic material, the same ceramic material as those mentioned with respect to the ceramic substrate 2 may be used.

The thickness (cured state) of the insulating layer 6, which is not particularly restricted, is preferably about 1-100 µm, and more preferably about 5-50 µm.

The thickness of the thermal cutting blade 1A, which is not particularly restricted, is preferably about 0.1-2.5 mm, more preferably about 0.1-1.3 mm, and most preferably about 0.2-0.5 mm. If the thickness of the thermal cutting blade 1A is excessively thin, fractures such as cracks and cutouts, will be readily produced. Consequently, it will be difficult to handle the blade 1A. Conversely, if the thermal cutting blade 1A is excessively thick, it will be difficult to connect tubes after they are cut by melting. In addition, the bonding strength decreases.

It is useful to reduce the thickness of the thermal cutting blade 1A for cutting and connecting tubes. In addition, the following advantages are accompanied. That is, in the case where a plurality of thermal cutting blades 1A are superimposed and housed in a cartridge (case) not shown herein, the number of thermal cutting blades 1A housed in the cartridge of a constant volume, can be increased.

The thermal cutting blade 1A mentioned above has excellent thermal conductivity and heat resistance since the surface is formed of a ceramic material. Therefore, very stable heat properties can be ensured.

Hereinbelow, the method of manufacturing the thermal cutting blade 1A will be described by way of example with reference to the case where the resistor element 3 and the insulating layer 6 are formed by simultaneous baking after the resistor element 3 etc. are formed by coating a conductive paste by use of the screen printing.
[1A] On the ceramic substrate 2 (large and uncut base plate) manufactured in advance, a conductive paste for forming the resistor element 3 etc. is coated in a predetermined pattern by use of the screen printing.
   As a conductive material, a main ingredient of the conductive paste, various metals or metal compounds are usually used in the form of particles. Among these, Ag or an Ag series alloy is particularly preferable. As the Ag series alloy, use may be made of Ag-Pd alloy, Ag-Pt alloy, Ag-Pd-Pt alloy, and the like. The Ag-series alloy containing Pd is superior in migration resistance, compared to pure Ag. Such Ag or an Ag series alloy is usually present in the form of particles in the conductive paste. The average diameter of particles of Ag or the Ag series alloy is preferably about 0.5-50 µm, and particularly, about 1-20 µm. If the average diameter is less than 0.5 µm, a shrinkage rate of the resistor element 3 etc. will increase. Conversely, in the excess of 50 µm, printing properties and dispersing properties of the conductive paste will decrease in some cases.
   As the conductive material, instead of or in addition to Ag or the Ag series alloy, Cu, Au or an alloy containing Cu and Au may be used. Alternatively, the conductive material may include ruthenium dioxide or a conductive double oxide complex such as lead ruthenate.
   As a vehicle for the conductive paste, use may be made of binders such as epoxy resin, thermoset melamine resin, acryl series resin, nitrocellulose, ethylcellulose, phenol resin, vinyl resin, and polyimide resin; solvents such as alcohols, toluene, xylene, butyl carbitol, and terpineol; thermoset resins such as polyvinyl chloride for improving plasticizing action; other agents such as dispersant, activating agent, viscosity modifier, film adhesiveness accelerating substance (for example, metal oxide), resistance modifying substance. These agents can be arbitrarily and appropriately blended depending on purposes.
   In particular, in the case where the screen printing is carried out by using such a conductive paste mentioned above, it is preferred to use a screen having 180 - 300 meshes, particularly, 200-250 meshes.
   The film thickness of the resistor element 3 etc. can be readily set by appropriately controlling conditions for the screen printing, such as the thickness of a screen emulsion coating, rubber hardness of a squeegee, the distance between a screen and a substrate to be printed, and a moving rate of the squeegee.
   In the present invention, the conductive pastes for use in the resistor element 3, terminals 4 and 5 may differ in conditions such as composition, viscosity, and film thickness.
[2A] To a raw material, such as an alumina powder, of the insulating layer 6, a binder and a solvent are added. The resultant mixture is kneaded to obtain a slurry. The average diameter of the alumina powder to be used is preferably about 0.1-100 µm, and more preferably, about 0.1-10 µm.
   Subsequently, after the terminals 4 and 5 are masked, if necessary, in a desired form (e.g., a disk form), the aforementioned slurry is coated on the entire surface of the substrate 2 and the resistor element 3, and then dried. As the coating method, there are screen printing, spray, dipping, roll coating, and the like.
   A method for forming the insulating layer 6 is not restricted to the coating methods mentioned above. The insulating layer may be formed by, for example, preparing a green sheet of a base material for the insulating layer by a doctor blade method, and then, laminating the green sheet on the substrate and the resistor element.
[3A] The conductive paste of the resistor element 3 and the coating film of the insulating layer 6, formed on the ceramic substrate 2, are baked simultaneously at a low temperature by using a furnace, for example. The baking is preferably performed at a temperature of 200-950°C, and more preferably at a temperature of 500-950°C, for 5-30 minutes.
   Note that, if necessary before baking, thermal press and binder removing treatment may be applied. Cutting grooves may be formed.
[4A] The large size base plate thus manufactured is cut into pieces of a predetermined size. In this manner, a plurality of thermal cutting blades 1A are obtained.

Hereinbelow, we will explain the method of manufacturing the thermal cutting blade 1A in connection with the case where the conductive paste, a material for the resistor element and a ceramic material for forming the insulating layer 6 are coated by the screen printing process in the order mentioned.
[1A'] On the ceramic substrate 2 (large and uncut base plate) manufactured in advance, a conductive paste for forming the resistor element 3 etc. is coated in a predetermined pattern by use of the screen printing.
   As the conductive material, a main ingredient of the conductive paste, various metals or metal compounds are usually used in the form of particles. Among these, Ag or an Ag series alloy is particularly preferable. As the Ag series alloy, use may be made of Ag-Pd alloy, Ag-Pt alloy, Ag-Pd-Pt alloy, and the like. The Ag-series alloy containing Pd is superior in migration resistance, compared to pure Ag. Such Ag or an Ag series alloy is usually present in the form of particles in the conductive paste. The average diameter of particles of Ag or the Ag series alloy is preferably about 0.5-50 µm, and particularly, about 1-20 µm. If the average diameter is less than 0.5 µm, a shrinkage rate of the resistor element 3 etc. will increase. Conversely, in the excess of 50 µm, printing properties and dispersing properties of the conductive paste will decrease in some cases.
   As the conductive material, instead of or in addition to Ag or the Ag series alloy, Cu, Au or an alloy containing Cu and Au may be used. Alternatively, the conductive material may include ruthenium dioxide or a conductive double oxide complex such as lead ruthenate.
   As a vehicle for the conductive paste, use may be made of binders such as epoxy resin, thermoset melamine resin, acryl series resin, nitrocellulose, ethylcellulose, phenol resin, vinyl resin, and polyimide resin; solvents such as alcohols, toluene, xylene, butyl carbitol, and terpineol; thermoset resins such as polyvinyl chloride for improving plasticizing action; other agents such as dispersant, activating agent, viscosity modifier, film adhesiveness accelerating substance (for example, metal oxide), resistance modifying substance. These agents can be arbitrarily and appropriately blended depending on purposes.
   In particular, in the case where the screen printing is carried out by using such a conductive paste mentioned above, it is preferred to use a screen having 180 - 300 meshes, particularly, 200-250 meshes.
   The film thickness of the resistor element 3 etc. can be readily set by appropriately controlling conditions for the screen printing, such as the thickness of a screen emulsion coating, rubber hardness of a squeegee, the distance between a screen and a substrate to be printed, and a moving rate of the squeegee.
   In the present invention, the conductive pastes for use in the resistor element 3, terminals 4 and 5 may differ in conditions such as composition, viscosity, and film thickness.
   The conductive paste of the resistor element 3 formed on the ceramic substrate 2 by the screen method, is baked at a low temperature by using a furnace, for example. The baking is preferably performed at a temperature of 200-950°C, and more preferably at a temperature of 500-950°C, for 5-30 minutes.
[2A'] To a raw material, such as an alumina powder, of the insulating layer 6, a binder, and a solvent are added. The resultant mixture is kneaded to obtain a slurry. The average diameter of the alumina powder to be used is preferably about 0.1-100 µm, and more preferably, about 0.1-10 µm.
   Subsequently, after the terminals 4 and 5 are masked, if necessary, in a desired form (e.g., a disk form), the aforementioned slurry is coated on the resistor element 3, and then dried. As the coating method, there are screen printing, spray, dipping, roll coating, and the like.
   A method for forming the insulating layer 6 is not restricted to the coating methods mentioned above. The insulating layer may be formed by, for example, preparing a green sheet of a base material for the insulating layer by a doctor blade method, and then laminating the green sheet on the resistor element 3.
   The coating film of the insulating layer 6 formed on the resistor element 3, is baked at a low temperature by using a furnace, for example. The baking is preferably performed at a temperature of 200-950°C, and more preferably at a temperature of 500-950°C, for 5-30 minutes.
[3A'] In the meantime, if necessary before baking, thermal press and binder removing treatment may be applied. Cutting grooves may be formed.
[4A'] The large size base plate thus manufactured is cut into pieces of a predetermined size. In this manner, a plurality of thermal cutting blades 1A are obtained.

The resistor element 3 etc., can be manufactured easily in a short time by the aforementioned screen printing method, even if the resistor element 3 etc. have a complicated and fine pattern. As a result, the manufacturing cost can be reduced. Furthermore, since the pattern of resistor element 3 is improved in dimensional accuracy, a reproducible resistivity with high accuracy can be obtained. To be more specific, the error of the resistivity of the resistor element 3 compared to a designed resistivity can be within ±5%, in particular, within ±1.5%.

Since the resistor element 3 etc. exhibit a high adhesivity to the ceramic substrate 2, the peeling-off of the resistor element 3 does not take place during the manufacturing steps.

In the case where the conductive paste of the resistor element 3 and the coating film of the insulating layer 6 are simultaneously baked, the manufacturing is performed in simple steps, reducing the manufacturing cost.

It should be noted that, instead of the ready-made ceramic substrate 2 (baked in advance), use may be made of, for example, an unbaked green sheet which is prepared by the doctor blade method and have not yet been baked. In this case, the resistor element pattern made of the conductive paste and an insulating film coating layer may be formed in the order mentioned on the greet sheet, and then the entire construct thus obtained may be baked simultaneously. Alternatively, individual layers may be baked separately.

The formation method of the resistor element 3 of the present invention, which is not restricted to the screen printing method, may include a method in which a metal foil such as stainless steel foil or nickel chrome foil is punched in a desired pattern. Alternatively, the resistor element 3 is formed in a desired pattern by etching a conductive thin film formed by plating, deposition, sputtering CVD, or the like.

FIG. 2 is a perspective view showing another embodiment of the thermal cutting blade of the present invention. As shown in the figure, a thermal cutting blade 1B has a metal substrate 21. The metal substrate 21 is formed of a metal having an excellent thermal conductivity which permits heat to diffuse and distribute uniformly along the substrate surface. Specific examples of the metal include copper, aluminium, gold, silver, iron, nickel, cobalt, titanium, and an alloy containing any one of the metals mentioned (e.g., stainless steel, brass, copper-beryllium alloy, aluminium alloy, and titanium alloy). Of these metals, copper or a copper alloy (especially containing copper in an amount of 99.9 wt% or more) is preferable.

The preferable thickness of the metal substrate 21, which varies with the constituting materials, is preferably about 0.05-2.5 mm, and more preferably, 0.1-0.5 mm.

To increase the adhesive strength of a first insulating layer 22, the surface of the metal substrate 21, on which the first insulating layer 22 is formed, may be rendered rough. To make a rough surface, the surface of the metal substrate 21 may be treated by a rough surface processing such as rolling by a rough surface roll, sand blasting, or jet scribing.

On the metal substrate 21, the first insulating layer 22 is formed. The first insulating layer 22 is preferred to have the same constitution as that of the insulating layer 6 of the embodiment shown in FIG. 1. More specifically, the first insulating layer 22 is preferably formed of any one of various inorganic insulating materials.

The thickness of the first insulating layer 22 (cured state), which is not particularly restricted, is preferably 3 to 100 µm, and more preferably 5-50 µm.

On the first insulating layer 22, the resistor element 3 and terminals 4 and 5 are formed in the same manner as described in the embodiment of FIG. 1.

On the resistor element 3, a second insulating layer 61 corresponding to the insulating layer 6 of the embodiment of FIG. 1, is formed so as to cover the surface of the resistor element 3 except for the terminals 4 and 5.

The same advantages as mentioned in the embodiment of FIG. 1 can be obtained with respect to the thermal cutting blade 1B of the embodiment of FIG. 2. In addition, in the thermal cutting blade 1B of this embodiment, since the metal substrate 21 has a quite high strength, the occurrence of fractions such as splits, cutouts, and cracks are successfully prevented. Consequently, the thermal cutting blade 1B can be reduced in thickness.

Hereinbelow, the method of manufacturing the thermal cutting blade 1B will be described by way of example with reference to the case where the resistor element 3 etc. are formed by the screen printing process, and where the first insulating layer 22, the resistor element 3, and the second insulating layer 61 are formed by simultaneous baking.
[1B] On the metal substrate 21 (large and uncut base plate) manufactured in advance, the first insulating layer 22 is formed. To be more specific, to a raw material, such as an alumina powder, of the first insulating layer 22, a binder and a solvent are added. The resultant mixture is kneaded to obtain a slurry. Thereafter, the slurry is coated on the surface of the metal substrate 21 and dried.
[2B] The conductive paste for forming resistor element 3 etc. is coated in a predetermined pattern by the screen printing method in the same manner as in step [1A] of the previous embodiment.
[3B] The second insulating layer 61 is coated on the resistor element 3 in the same manner as in step [2A] of the previous embodiment.
[4B] The coating film of the first insulating layer 22 formed on the metal substrate 21, the conductive paste of the resistor element 3, and the second coating insulating layer 61, are baked simultaneously at a low temperature by using a furnace, for example. The suitable baking conditions and the pretreatment for the baking are the same in step [3A] of the previous embodiment.
[5B] The base plate thus manufactured is cut (divided) into pieces of a predetermined form. In this manner, a plurality of thermal cutting blades 1B are obtained.

Note that, in order to form the first insulating layer 22 and the second insulating layer 61, a green sheet may be used in the same manner as in the previous embodiment. Furthermore, only the coating film for the first insulating layer 22 and the conductive paste for resistor element 3, may be baked simultaneously.

Hereinbelow, the method of manufacturing the thermal cutting blade 1B will be described by way of example with reference to the case where the first insulating layer 22, the resistor element 3, and the second insulating layer 61 are baked in the order mentioned.
[1B'] On the metal substrate 21 (large and uncut base plate), the coating film for the first insulating layer 22 is formed. To be more specific, to a raw material, such as an alumina powder, of the first insulating layer 22, a binder and a solvent are added. The resultant mixture is kneaded to obtain a slurry. Thereafter, the slurry is coated on the surface of the metal substrate 21 and baked at a low temperature. The low temperature baking is, for example, preferably performed by using a furnace, preferably at a temperature of 200-950°C, and more preferably at a temperature of 500-950°C, for 5-30 minutes, as described in the previous embodiment.
[2B'] The conductive paste for forming the resistor element 3 etc. is coated in a predetermined pattern by the screen printing method, in the same manner as in step [1A'] of the previous embodiment. Subsequently, the low temperature baking is performed in the same manner as in step [1A'].
[3B'] The coating film for the second insulating layer 61 is formed on the resistor element 3 in the same manner as in step [2A'] of the previous embodiment. Subsequently, the low temperature baking is performed in the same manner as in step [2A'].
[4B'] The base plate thus manufactured is cut (divided) into pieces of a predetermined form. In this manner, a plurality of thermal cutting blades 1B are obtained.

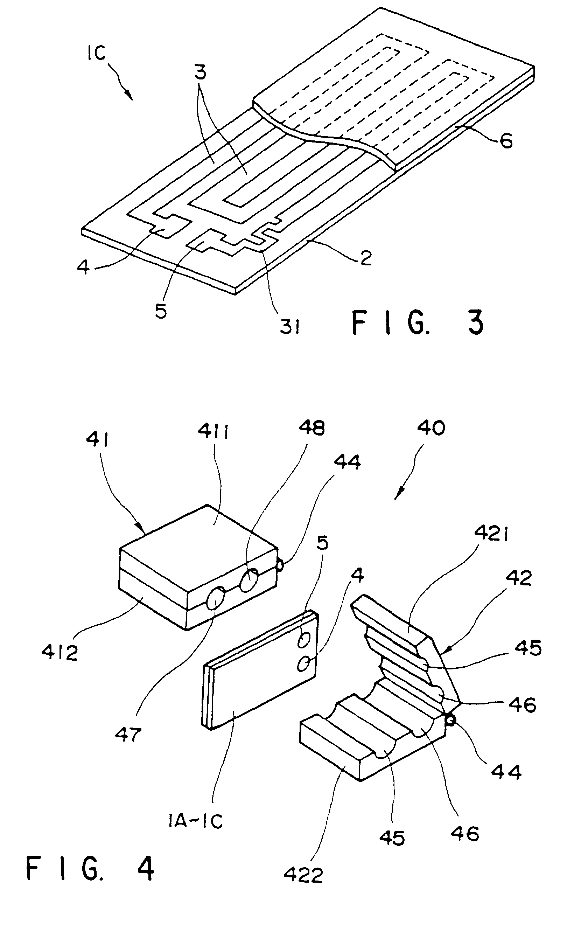

FIG. 3 is a perspective view showing a further embodiment of the thermal cutting blade of the present invention. A thermal cutting blade 1C shown in the figure is the same as the thermal cutting blade 1A except that a high temperature fuse portion 31 is provided in a part of the resistor element 3.

The high temperature fuse portion 31 is formed of a material which is readily melt and cut if a predetermined high-temperature state is maintained for a predetermined time. By way of example, these are low-melting point alloys represented by a tin-lead alloy.

The temperature at which the high temperature fuse portion 31 is melt and cut, is lower than the melting temperature of a tube, for example, about 320°C. The time period required for cutting the high temperature fuse portion 31 at the temperature mentioned above is equal to or shorter than the time required for the cutting and connecting of the tubes, for example, about 10 minutes.

The thermal cutting blade of the present invention is basically disposable (single use). In the case of the thermal cutting blade 1C, it is easily to know whether the blade is an unused one or a used one based on the fact that current flows or does not flow between the terminals 4 and 5. More specifically, upon power supply to the resistor element 3 via the terminals 4 and 5, when used, the resistor element 3 generates heat, raising temperature of the blade over the fusing temperature or more. Consequently, the high temperature fuse portion 31 is melt and cut when the fusing temperature is maintained during the predetermined time period. As a result, even if power is supplied between the terminals 4 and 5, next time, the resistor element 3 will not generate heat. It is therefore evident that the thermal cutting blade 1C has been used once. In this way, the blade can be prevented from being used for a plurality of times, beforehand.

In the thermal cutting blade 1C of this embodiment, the fuse portion 31a is provided in a part of the resistor element 3. Instead, the entire resistor element 3 may be formed of a material capable of being melted and cut if the predetermined high temperature state is maintained for a predetermined time period. In this case, the fuse portion 31 resides in the center portion of the resistor element 3, which is the portion highest in temperature when power is supplied via the terminals 4 and 5. The center portion is melt and cut when once used, and therefore, the repeat usage of the blade can be prevented, beforehand.

The fuse portion 3 may be included by a bypass (not shown) circuit which goes round the entire portion or a part of the resistor element 3. In this case, when the thermal cutting blade is used for the first time, current flows through the fuse portion by going round the entire or a part of the resistor element 3, upon power supply to the thermal cutting blade via the terminals 4 and 5. As a result, the fuse portion generates heat and fuses. Thereafter, current flows the entire portion of the resistor element 3, which then generates heat. In contrast, in the case of second usage onwards, since the fuse portion has been already melted and cut, current flows the resistor element 3 in its entirety, immediately upon power supply via terminals 4 and 5, resulting heat generation from the resistor element. Hence, by detecting the voltage increase patterns between the terminals 4 and 5, it is possible to know whether the thermal cutting blade is unused or used.

The thermal cutting blade 1C mentioned above can be manufactured in the same manner as in the manufacturing steps [1A]-[4A] of the thermal cutting blade 1A, shown in FIG. 1. In this case, the conductive paste for the resistor element 3 and the conductive paste for the fuse portion 31 may be formed in desired patterns separately by different screen printing processes in step [1A]. In addition, the fuse portion 31 may be formed after the resistor element 3 is baked.

Such a fuse portion as mentioned above may be provided also in the thermal cutting blade 1B described in the embodiment of FIG. 2. In this case, the similar advantages can be also obtained.

Hereinbelow, we will explain an example of a tube connecting method using any one of the thermal cutting blades 1A-1C of the present invention. One of the thermal cutting blades 1A to 1C (hereinafter, representatively referred to as "thermal cutting blade 1A") is used by being installed in a predetermined tube connecting apparatus.

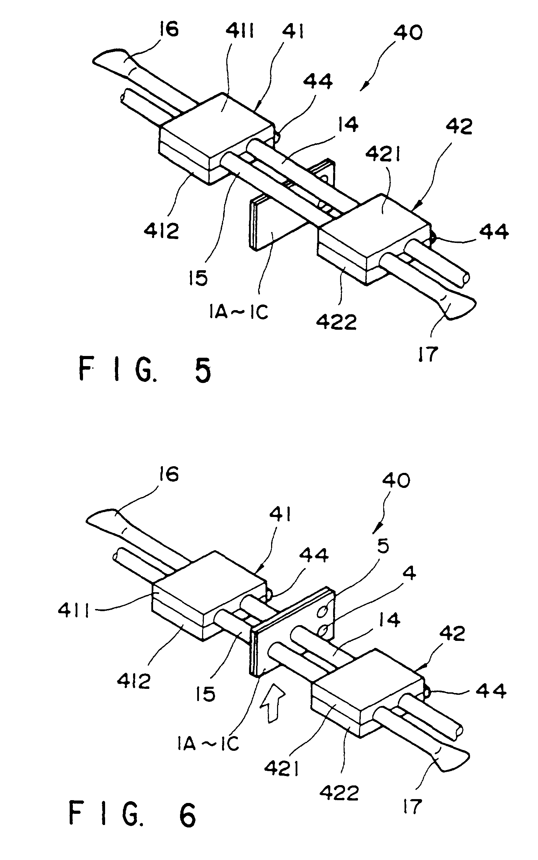

FIG. 4 is a perspective view showing a structure of a tube connecting apparatus 40, and FIGS. 5 to 8 are perspective views, each showing a connecting step of tubes 14 and 15 by use of the tube connecting apparatus 40. As shown in these figures, the tube connecting apparatus 40 has a structure comprising a pair of holders 41 and 42 and the thermal cutting blade 1A of the present invention which is replaceably provided between the holders. When the apparatus is used, two polyvinyl chloride tubes 14 and 15 are placed adjacent to each other between holders 41 and 42. The tubes are then melted and cut by the thermal cutting blade 1A which has been heated. Subsequently, the holder 41 is moved to coincide cut edges of the tubes to be connected to each other. After the thermal cutting blade 1A is removed, tubes 14 and 15 are fuse-bonded each other.

To describe more precisely, the holder 41 shown in FIG. 4 is divided into a holder piece 411 and a holder piece 412 which corresponds to an upper piece and a lower piece, respectively. Similarly, the holder 42 is also divided into a holder piece 421 and a holder piece 422. These holder pieces 411, 412, 421 and 422 are individually rotatable around a supporting point 44.

In the inner surfaces of the holders 411 and 412, which face to each other, two grooves 45 and 46 having sectional shapes of a half-disk, are formed in parallel. Further, in the inner surfaces of the holders 421 and 422, the two grooves 45 and 46 are provided in the same manner. When the holder piece 411 is superimposed on the holder piece 412, and the holder piece 421 on the holder piece 422, tube holding portions 47 and 48 are formed having a sectional shape of a disk-form.

Although not shown in the figures, to the end portions of the holders 41 and 42, near the thermal cutting blade 1A, tube sandwiching portions may be provided which sandwich the tubes 14 and 15 when holder pieces 411 and 412, and 421 and 422 are closed. In the sandwiching portions, the tubes are made flat and the interior portions are blocked.

Hereinbelow, we will explain the tube connecting method by using a tube connecting apparatus 40.

As shown in FIG. 5, the tubes 14 and 15 are placed in the grooves 45 and 46 of the holders 41 and 42 in such a manner that blocked end portions 16 and 17 are directed in the reverse directions to each other. Then, the two tubes 14 and 15 are sandwiched and fixed in the tube holding portions 47 and 48 by closing the holder pieces 411 and 412, and 421 and 422.

On the other hand, one piece of the thermal cutting blade 1A is taken out from the cartridge and set at a thermal cutting blade supporting portion (not shown) present in the lower space between holders 41 and 42.

Subsequently, power, e.g., a voltage of 15-24V, is supplied by power supplying means (not shown) to the resistor element 3 in the thermal cutting blade 1A via terminals 4 and 5 of the thermal cutting blade 1A. Consequently, the resistor element 3 generates heat. The thermal cutting blade 1A is heated to a temperature (for example, 260-330°C) of a melting point of the tubes 14 and 15, or more.

When the thermal cutting blade 1A is moved toward the upper side in the figure from this state, as shown in FIG. 6, the tubes 14 and 15 are melt and cut with heat of the thermal cutting blade 1A. At this point, the cut edges of the tubes 14 and 15 maintain a molten and soften state of high-temperature. Since the cut edges are not communicated with the outside, an aseptic condition within the tubes can be maintained.

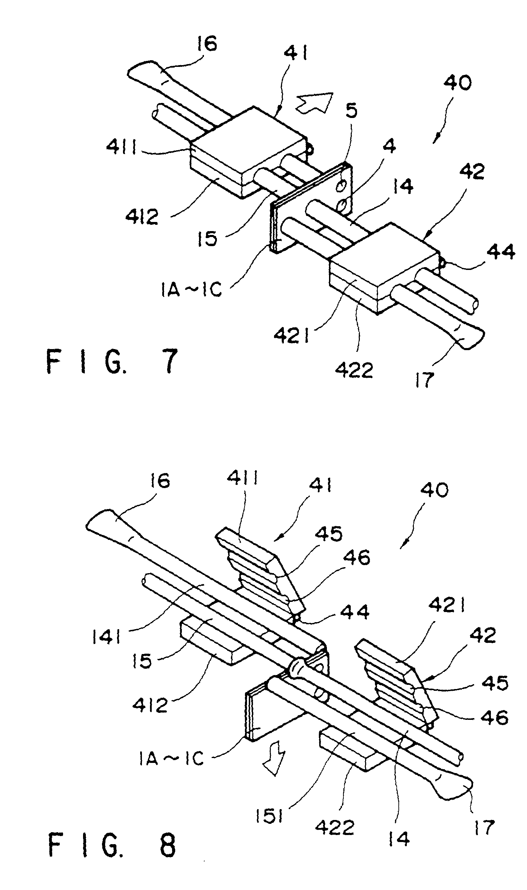

Then, as shown in FIG. 7, the holder 41 is moved in the direction perpendicular to the longitudinal direction of the tube, within the plane of the tube arrangement, while the tubes 14 and 15 maintain the molten state. When the cut edges of the tubes 14 and 15 are coincided to each other, the movement of the holder 41 is terminated and immobilized.

As shown in FIG. 8, after the thermal cutting blade 1A is moved toward the lower side in the figure, the holder 42 is moved by a small distance in the longitudinal direction of the tubes 14 and 15 so as to come closer to the other holder 41. In this manner, the molten cut edges of the tubes 14 and 15 are contacted and connected to each other, accomplishing the connection of the tubes 14 and 15.

During the throughout operations beginning from the step of cutting two tubes 14 and 15 by the thermal cutting blade 1A to the step of connecting the cut edges, the cut edges of the tubes 14 and 15 and their peripheral portions maintain a molten and soften state at a high-temperature. Furthermore, until the cut edges are adhered and connected, individual cut edges are in tight contact with the surfaces of the thermal cut blade 1A, preventing the communication with the outside. Therefore, during the throughout operations, the aseptic state of the interior of the tubes can be maintained almost completely.

After the tubes 14 and 15 are connected as mentioned above, tube pieces 141 and 151 having the blocked ends 16 and 17 of the tubes are discarded.

When other tubes are connected next time, the used thermal cutting blade 1A is substituted with a new one and the used thermal cutting blade 1A is discarded. In the case of thermal cutting blade 1C, it is possible to know whether the thermal cutting blade is a used one or an unused one. The possibility can be avoided in which a used thermal cutting blade 1C is inadvertently used.

In the foregoing, the thermal cutting blade is described based on embodiments shown in figures. However, the present invention will not be limited to the specific embodiments.

As is explained in the foregoing, since an inorganic insulating material is used either for the substrate itself or for the surface on which a resistor element is formed, the thermal cutting blade of the present invention is excellent in thermal conductivity and heat resistance and has a large heat capacity. In addition, since the structure of the thermal cutting blade is simple and the number of the layers constituting the blade is small, the thickness of the thermal cutting blade can be reduced. Therefore, melting, cutting, and fusion bonding of tubes can be carried out quite satisfactorily. As a result, the connected portions are excellent in bonding strength and air tightness as well as in an ascetical state. In addition, in the particular case where a ceramic substrate is used, a material cost can be reduced. In the case where a metal substrate is used, the thickness of the thermal cutting blade can be reduced.

The thermal cutting blade of the present invention can be readily manufactured. In particular, in the case where a resistor element and an insulating layer are formed by printing a conductive paste in a desired pattern and simultaneously baked, it is possible to reduce the manufacturing steps. Hence, the productivity is improved and cost can be significantly reduced.

Furthermore, in the case where a high-temperature fuse portion is provided in at least one portion of the resistor element, it is possible to know whether the thermal cutting blade is a used one or an unused one. Hence, the reuse of the thermal cutting blade can be prevented beforehand.

## Claims

1. A thermal cutting blade (1A) of a self-heating type for melting and cutting a resin tube (14,15), comprising
a ceramic substrate (2);
a resistor element (3) formed on said ceramic substrate (2) in a desired pattern, for generating heat upon power supply;
terminal portions (4,5) formed on both ends of said resistor element (3);
an insulating layer (6) covering the surface of said resistor element (3), **characterised in**
a high-temperature fuse portion (31) provided in a part of said resistor element (3) and capable of melting and breaking when predetermined high temperature conditions are continued for a predetermined time.

2. The thermal cutting blade according to claim 1, wherein said insulating layer (6) is formed of an inorganic insulating material.

3. The thermal cutting blade according to claim 2, wherein said resistor element (3) is formed by printing a conductive paste in a desired pattern and baking it, and at least said resistor element (3) and said insulating layer (6) are formed by simultaneous baking.

4. The thermal cutting blade according to claim 2, wherein said resistor element (3) is formed by printing a conductive paste in a desired pattern and baking it, and said resistor element (3) and said insulating layer (6) are formed in individual baking steps separately in the sequential order mentioned.

5. A thermal cutting blade of a self-heating type for melting and cutting a resin tube, comprising
a metal substrate (21);
a first insulating layer (22) made of an inorganic insulating material and formed on said metal substrate (21);
a resistor element (3) formed on said first insulating layer (22) in a desired pattern, for generating heat upon power supply;
terminal portions (4,5) formed on both ends of said resistor element (3); and
a high-temperature fuse portion (31) provided in a part of said resistor element (3) and capable of melting and breaking when predetermined high temperature conditions are continued for a predetermined time; and
a second insulating layer (61) covering the surface of said resistor element (3).

6. The thermal cutting blade according to claim 5, wherein said second insulating layer (61) is formed of an inorganic insulating material.

7. The thermal cutting blade according to claims 5 and 6, wherein said resistor element (3) is formed by printing a conductive paste in a desired pattern and baking it, and at least said first insulating layer (22) and said resistor element (3) are formed by simultaneous baking.

8. The thermal cutting blade according to claim 5 and 6, wherein said resistor element (3) is formed by printing a conductive paste in a desired pattern and baking it, and said first insulating layer (22), said resistor element (3), and said second insulating layer (61) are formed by simultaneous baking.

9. The thermal cutting blade according to claims 5 and 6, wherein said resistor element (3) is formed by printing a conductive paste in a desired pattern and baking it, and said first insulating layer (22) and said resistor element (3) are formed in individual baking steps, separately in the order mentioned.

10. The thermal cutting blade according to claims 5 and 6, wherein said resistor element (3) is formed by printing a conductive paste in a desired pattern and baking it, and said first insulating layer (22), said resistor element (3) and said second insulating layer (61) are formed in individual baking steps, separately in the order mentioned.

## Patentansprüche

1. Wärmeschneidklinge 1A eines Selbsterwärmungstyps zum Schmelzen und Schneiden eines Harzrohrs (14, 15), umfassend:
ein Keramiksubstrat (2);
ein Widerstandselement (3), welches auf dem Keramiksubstrat (2) in einem gewünschten Muster ausgebildet ist und bei Zufuhr von Leistung Wärme erzeugt;
Anschlussabschnitte (4, 5), welche an beiden Enden des Widerstandselements (3) ausgebildet sind;
eine Isolierschicht (6), welche die Oberfläche des Widerstandselements (3) bedeckt, **dadurch gekennzeichnet, dass**
ein Hochtemperatur-Schmelzabschnitt in einem Abschnitt des Widerstandselements (3) vorgesehen ist und in der Lage ist zu schmelzen und zu unterbrechen, wenn vorbestimmte Hochtemperaturzustände über eine vorbestimmte Zeit anhalten.

2. Wärmeschneidklinge nach Anspruch 1, wobei die Isolierschicht (6) aus einem anorganischen Isoliermaterial besteht.

3. Wärmeschneidklinge nach Anspruch 2, wobei das Widerstandselement (3) durch Drucken einer leitfähigen Paste in einem gewünschten Muster und Backen davon ausgebildet ist und mindestens das Widerstandselement (3) und die Isolierschicht (6) durch gleichzeitiges Backen ausgebildet sind.

4. Wärmeschneidklinge nach Anspruch 2, wobei das Widerstandselement (3) durch Drucken einer leitfähigen Paste in einem gewünschten Muster und Backen davon ausgebildet ist und das Widerstandselement (3) und die Isolierschicht 6 in individuellen Backschritten getrennt in der erwähnten Reihenfolge ausgebildet sind.

5. Wärmeschneidklinge eines Selbsterwärmungstyps zum Schmelzen und Schneiden eines Harzrohrs, umfassend:
ein Metallsubstrat (21);
ein erste Isolierschicht (22) aus einem anorganischen Isoliermaterial, welche auf dem Metallsubstrat (21) ausgebildet ist;
Widerstandselement (3), welches auf der ersten Isolierschicht (22) in einem gewünschten Muster ausgebildet ist und bei Zufuhr von Leistung Wärme erzeugt;
Anschlussabschnitte (4, 5), welche an beiden Enden des Widerstandselements (3) ausgebildet sind;
ein Hochtemperatur-Schmelzabschnitt (31), welcher in einem Abschnitt des Widerstandselements (3) vorgesehen ist und fähig ist zum Schmelzen und Unterbrechen, wenn vorbestimmte Hochtemperaturzustände über eine vorbestimmte Zeit anhalten; und
eine zweite Isolierschicht (61), welche die Oberfläche des Widerstandselements (3) bedeckt.

6. Wärmeschneidklinge nach Anspruch 5, wobei die zweite Isolierschicht (61) aus einem anorganischen Isoliermaterial besteht.

7. Wärmeschneidklinge nach Anspruch 5 und 6, wobei das Widerstandselement (3) durch Drucken einer leitfähigen Paste in einem gewünschten Muster und Backen davon ausgebildet ist und mindestens die erste Isolierschicht (22) und das Widerstandselement (3) durch gleichzeitiges Backen ausgebildet sind.

8. Wärmeschneidklinge nach Anspruch 5 und 6, wobei das Widerstandselement (3) durch Drucken einer leitfähigen Paste in einem gewünschten Muster und Backen davon ausgebildet ist und die erste Isolierschicht (22), das Widerstandselement (3) und die zweite Isolierschicht (61) durch gleichzeitiges Backen ausgebildet sind.

9. Wärmeschneidklinge nach Anspruch 5 und 6, wobei das Widerstandselement (3) durch Drucken einer leitfähigen Paste in einem gewünschten Muster und Backen davon ausgebildet ist und die erste Isolierschicht (22) und das Widerstandselement (3) in individuellen Backschritten getrennt in der erwähnten Reichenfolge ausgebildet sind.

10. Wärmeschneidklinge nach Anspruch 5 und 6, wobei das Widerstandselement (3) durch Drucken einer leitfähigen Paste in einem gewünschten Muster und Backen davon ausgebildet ist und die erste Isolierschicht (22), das Widerstandselement (3) und die zweite Isolierschicht (61) in individuellen Backschritten getrennt in der erwähnten Reichenfolge ausgebildet sind.

## Revendications

1. Lame de coupe chauffante (1A) destinée à assurer la fusion et la coupe d'un tube de résine (14, 15), comprenant :
un substrat céramique (2),
un élément de résistance (3) formé sur le substrat céramique (2) avec un dessin voulu pour le dégagement de chaleur lors de la transmission d'énergie,
des parties de borne (4, 5) formées aux deux extrémités de l'élément de résistance (3), et
une couche isolante (6) recouvrant la surface de l'élément de résistance (3), **caractérisée par**
une partie de fusible (31) à haute température placée dans une partie de l'élément de résistance (3) et pouvant fondre et se séparer lorsque des conditions prédéterminées à haute température sont maintenues pendant un temps prédéterminé.

2. Lame de coupe chauffante selon la revendication 1, dans laquelle la couche isolante (6) est formée d'un matériau isolant inorganique.

3. Lame de coupe chauffante selon la revendication 2, dans laquelle l'élément de résistance (3) est formé par impression d'une pâte conductrice avec un dessin voulu et cuisson de la pâte, et l'élément de résistance (3) et la couche isolante (6) au moins sont formés par cuisson simultanée.

4. Lame de coupe chauffante selon la revendication 2, dans laquelle l'élément de résistance (3) est formé par impression d'une pâte conductrice avec un dessin voulu et par cuisson, et l'élément de résistance (3) et la couche isolante (6) sont formés dans des étapes individuelles de cuisson, séparément et dans l'ordre indiqué.

5. Lame de coupe chauffante destinée à assurer la fusion et la coupe d'un tube de résine, comprenant
un substrat métallique (21),
une première couche isolante (22) formée d'un matériau isolant inorganique sur le substrat métallique (21),
un élément de résistance (3) formé sur la première couche isolante (22) avec un dessin voulu et destiné à dégager de la chaleur lors de transmission d'énergie,
des parties de borne (4, 5) formées aux deux extrémités de l'élément de résistance (3), et
une partie de fusible à haute température (31) placée dans une partie de l'élément de résistance (3) et pouvant fondre et se diviser lorsque des conditions prédéterminées à haute température sont maintenues pendant un temps prédéterminé, et
une seconde couche isolante (61) recouvrant la surface de l'élément de résistance (3).

6. Lame de coupe chauffante selon la revendication 5, dans laquelle la seconde couche isolante (61) est formée d'un matériau isolant inorganique.

7. Lame de coupe chauffante selon les revendications 5 et 6, dans laquelle l'élément de résistance (3) est formé par impression d'une pâte conductrice avec un dessin voulu et par cuisson, et la première couche isolante (22) et l'élément de résistance (3) au moins sont formés par cuisson simultanée.

8. Lame de coupe chauffante selon les revendications 5 et 6, dans laquelle l'élément de résistance (3) est formé par impression d'une pâte conductrice avec un dessin voulu et par cuisson, et la première couche isolante (22), l'élément de résistance (3) et la seconde couche isolante (61) sont formés par cuisson simultanée.

9. Lame de coupe chauffante selon les revendications 5 et 6, dans laquelle l'élément de résistance (3) est formé par impression d'une pâte conductrice avec un dessin voulu et par cuisson, et la première couche isolante (22) et l'élément de résistance (3) sont formés dans des étapes individuelles de cuisson, séparément et dans l'ordre indiqué.

10. Lame de coupe chauffante selon les revendications 5 et 6, dans laquelle l'élément de résistance (3) est formé par l'impression d'une pâte conductrice avec le dessin voulu et par cuisson, et la première couche isolante (22), l'élément de résistance (3) et la seconde couche isolante (61) sont formés dans des étapes individuelles de cuisson, séparément et dans l'ordre indiqué.
